(19) Europäisches Patentamt

European Patent Office

Office européen des brevets

(11) **EP 1 021 476 B1**

(12) **EUROPÄISCHE PATENTSCHRIFT**

(45) Veröffentlichungstag und Bekanntmachung des Hinweises auf die Patenterteilung:
**16.04.2003 Patentblatt 2003/16**

(21) Anmeldenummer: **98954278.2**

(22) Anmeldetag: **15.09.1998**

(51) Int Cl.⁷: **C08G 18/48**, C09J 7/02,
C08G 18/66, C09J 7/04,
C09J 175/08

(86) Internationale Anmeldenummer:
**PCT/EP98/05841**

(87) Internationale Veröffentlichungsnummer:
**WO 99/015573 (01.04.1999 Gazette 1999/13)**

(54) **POLYURETHAN-KLEBSTOFF**

POLYURETHANE ADHESIVE

ADHESIF AU POLYURETHANE

(84) Benannte Vertragsstaaten:
**AT BE CH CY DE DK ES FI FR GB GR IE IT LI LU MC NL PT SE**

(30) Priorität: **24.09.1997 DE 19742216**

(43) Veröffentlichungstag der Anmeldung:
**26.07.2000 Patentblatt 2000/30**

(73) Patentinhaber: **Henkel Kommanditgesellschaft auf Aktien**
**40589 Düsseldorf (DE)**

(72) Erfinder:
• **MÖLLER, Thomas**
**D-40593 Düsseldorf (DE)**

• **GENSCH, Ingo**
**D-52441 Linnich (DE)**
• **FISCHER, Herbert**
**D-40229 Düsseldorf (DE)**
• **HÜBNER, Norbert**
**D-40597 Düsseldorf (DE)**
• **PLUM, Hermann-Josef**
**D-52428 Jülich (DE)**
• **HERLFTERKAMP, Bernhard**
**D-46236 Bottrop (DE)**

(56) Entgegenhaltungen:
DE-A- 4 242 687      US-A- 4 442 259
US-A- 4 740 534      US-A- 4 925 732

**Beschreibung**

Die Erfindung betrifft einen Klebstoff auf der Basis eines Polyurethans aus mindestens einem Diisocyanat und mindestens einem Polyethylenglykol mit niedrigem Molekulargewicht sowie seine Herstellung und Verwendung.

Ein Klebstoff auf der Basis dieser Komponenten ist bekannt. So wird in der WO 94/13726 ein hochmolekulares nichtionisches wasserlösliches Polyurethan beschrieben. Auf das hohe Molekulargewicht weist die spezifische Viskosität von mindestens 0,4 (1 %ige wäßrige Lösung bei 20 °C) hin und ebenso die Schmelzviskosität mehr als 3 Pas bei 175 °C nach Epprecht. Auf die gute Wasserlöslichkeit weist das praktisch unbeschränkte Mischungsverhältnis bei 20 °C hin. Ein weiteres wichtiges Kennzeichen ist sein Schmelzpunkt bei 60 bis 80 °C sowie sein Kristallisationsgrad von 20 bis 80 %, gemessen mit DSC und bezogen auf den Kristallisationsgrad von käuflichem längerkettigem Polyethylenglykol, speziell von Polyethylenglykol 6000. Das bekannte Polyurethan läßt sich aus einem Diisocyanat und einem Polyethylenglykol mit einem Polymerisationsgrad n von 8 bis 500 herstellen. Das Polyethylenglykol kann teilweise auch durch hydrophobe Diole ersetzt werden, z.B. durch Polypropylenglykol. Das bekannte Polyurethan kann als Klebstoff verwendet werden, sei es als Schmelzklebstoff oder in Form einer wäßrigen Dispersion bzw. Lösung. Vor allem läßt sich damit Papier verkleben, insbesondere Etiketten und Tapeten. Die erhaltenen Bindungen sind fest und können durch Einwirkung von Wasser oder von Wärme bei ca. 60 bis 80 °C wieder gelöst werden. Damit sind die geforderten Eigenschaften für viele Anwendungsfälle erfüllt.

Es gibt jedoch auch einen Bedarf nach Klebstoffen, die permanent klebrig sind und klebfähig bleiben sowie bei leichtem Anpreßdruck sofort auf fast allen Substraten haften. Insbesondere sind derartige Haftklebstoffe zunehmend für Verpackungen auf der Basis von Polyolefinen gefragt, insbesondere für Verpackungen aus Polyethylen und Polypropylen. Zur besseren Entsorgung sollten derartige Klebstoffe auch wasserlöslich sein. Darüber hinaus wird natürlich auch eine besondere Wirtschaftlichkeit und leichte Handhabung erwartet.

Die erfindungsgemäße Lösung ist den Patentansprüchen zu entnehmen. Sie besteht im wesentlichen aus einem Klebstoff auf der Basis eines Polyurethans aus

A) mindestens einem Diisocyanat und
B) mindestens einem niedermolekularen Polyethylenglykol,

wobei das Polyethylenglykol ein Molekulargewicht $M_z$ von bis zu 2000 und das Polyurethan einen Kristallisationsgrad von weniger als 20 % hat.

Der Kristallisationsgrad beträgt vorzugsweise weniger als 15 %, bezogen auf den Kristallisationsgrad von käuflichem Polyethylenglykol 6 000 als Standard. Der Kristallisationsgrad wird nach der DSC-Methode bestimmt (s. Beispiele). Der Kristallisationsgrad kann durch die Art und Menge der eingesetzten Diole und Diisocyanate beeinflußt werden, insbesondere durch die Molekulargewichte der Polyethylenglykoleinheiten.

Die Viskosität einer 50 Gew.-%igen wäßrigen Lösung liegt oberhalb von 10 000, vorzugsweise oberhalb von 20 000 mPas bei 22 °C, gemessen nach Brookfield (nähere Angaben: s. Beispiele).

Für die erfindungsgemäßen Polyurethane ist die Schmelzviskosität bei 110°C größer als 5, insbesondere größer als 30 Pas nach Epprecht.

Der erfindungsgemäße Klebstoff ist bei Normalklima (20 °C und 65 % relativer Luftfeuchtigkeit) wie ein Haftklebstoff permanent klebrig, zumindest über einen Zeitraum von 6 Monaten. Der erfindungsgemäße Klebstoff kann aber auch wie ein Dispersions- bzw. Lösungsklebstoff verwendet werden, d.h. das Wasser bzw. das Lösemittel muß nicht vor der Verklebung entfernt werden. Im Gegensatz dazu bleibt er aber klebfähig, d.h. man kann z.B. die Verklebung lösen und dann durch einfaches Zusammendrücken der Substrate wieder herstellen, ohne daß der Klebstoff aktiviert werden müßte.

Die Haftkraft reicht zumindest aus, um Schreibpapier an senkrechten Wänden auch im trockenen Zustand zu halten, wenn er in einer Menge von mindestens 50 g/m$^2$ aufgetragen ist.

Bei den Diisocyanaten handelt es sich um Verbindungen der allgemeinen Struktur O=C=N-X-N=C=O, wobei X ein aliphatischer, alicyclischer oder aromatischer Rest ist und der aliphatische oder alicyclische Rest 4 bis 18 C-Atome enthält. Es sollte ein aromatisches Diisocyanat verwendet werden, vorzugsweise MDI. Es kann zweckmäßigerweise bis zu 50 Gew.-% durch aliphatische oder alicyclische Diisocyanate ersetzt werden, insbesondere durch TMXDI. Als geeignete Isocyanate seien beispielsweise genannt: 1,5-Naphthylendiisocyanat, 4,4'-Diphenylmethandiisocyanat (MDI), 2,4'-Diphenylmethandiisocyanat bzw. Isomerengemische des MDI, hydriertes MDI (H$_{12}$MDI), Xylylendiisocyanat (XDI), Tetramethylxylylendiisocyanat (TMXDI)m, 4,4' Diphenyldimethylmethandiisocyanat, Di- und Tetraalkyldiphenylmethandiisocyanat, 4,4'-Dibenzyldiisocyanat, 1,3-Phenylendiisocyanat, 1,4-Phenylendiisocyanat, die Isomerenn des Toluylendiisocyanats (TDI), 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethylcyclohexan (IPDI), chlorierte und bromierte Diisocyanate, phosphorhaltige Diisocyanate, 4,4'-Diisocyanatophenylperfluorethan, Tetramethoxybutan-1,4-diisocyanat, Butan-1,4-diisocyanat, Hexan-1,6-diisocyanat (HDI), Dicyclohexylmethandiisocyanat, Cyclohexan-1,4-diisocyanat, Ethylen-diisocyanat, Phthalsäure-bis-isocyanatoethylester, ferner Diisocyanate mit reaktionsfähigen Halogenatomen, wie 1-Chlormethylphenyl-2,4-diisocyanat, 1-Brommethylphenyl-2,6-diisocyanat, 3,3-Bis-chlormethylether-4,4'-diphenyldiisocyanat. Schwefelhaltige Polyisocyanate erhält man beispielsweise durch Umsetzung von 2 mol Hexamethylen-diisocyanat mit 1 mol Thiodiglykol oder Dihydroxydihexylsulfid. Weitere wichtige Diisocyanate sind Trimethylhexamethylendiisocyanat, 1,4-Diisocyanatobutan, 1,12-Diisoccyanatododecan und Dimerfettsäure-diisocyanat.

Besonders geeignet sind: Tetramethylen-, Hexamethylen-, Undecan-, Dodecanmethylen-, 2,2,4-Trimethylhexan-, 1,3-Cyclohexan-, 1,4-Cyclohexan, 1,3-bzw. 1,4-Tetramethylxylol-, Isophoron-, 4,4-Dicyclohexylmethan- und Lysinester-Diisocyanat. Auch Mischungen sind brauchbar.

Die Wasserlöslichkeit des Polyurethans ergibt sich im wesentlichen aus den Gruppen des Polyethylenethers - $[CH_2CH_2\text{-}O\text{-}]_n$ -. Dabei ist n eine Zahl, die einem Molekulargewicht $M_z$ bis zu 2000, vorzugsweise von 150 bis 1 500, insbesondere von 200 bis 900 und ganz besonders von 300 bis 600 g/mol entspricht. Diese Struktureinheiten leiten sich von den als Diolen eingesetzten Polyethylenglykolen ab. Unter Polyethylenglykol sind aber nicht nur Polyaddiitonsprodukte von Ethylenoxid an Wasser oder Ethylenglykol als Startmolekül zu verstehen, sondern auch Polyadditionen an andere zweiwertige Alkohole, z.B. Butandiol, Hexandiol, 4,4'-Dihydroxy-diphenylpropan und 2,4,7,9-Tetramethyl-5-decin-4,7-diol. Auch mehrere Polyethylenglykole mit unterschiedlichen durchschnittlichen Molekulargewichten sind möglich.

Vorzugsweise wird das Polyethylenglykol mit einem Molekulargewicht von bis zu 2000 teilweise ersetzt durch mindestens ein Polyol aus der folgenden Gruppe:

a) in einem Ausmaß bis zu 50 % durch ein Block- oder statistisches Copolymeres von Ethylenoxid,
b) in einem Ausmaß von vorzugsweise bis zu 20 % durch ein hydrophobes Diol allein mit einer aliphatischen oder cycloatiphatischen Struktur,
c) durch hydrophobe homopolymere Polyalkylenglykole, wobei die AlkylenGruppe mehr als 2 C-Atome hat, und zwar in einem Ausmaß von bis zu 10 % für $C_3$-Alkylen-Gruppen und von bis zu 20 % für $C_4$-Alkylen-Gruppen,
d) in einem Ausmaß bis zu 40 % durch Polyethylenglykol mit einem Molekulargewicht von mehr als 2 000 bis 40 000,
e) in einem Ausmaß von bis zu 5 % durch höherfunktionelle Alkohole und
f) in einem Ausmaß von bis zu 5 % durch ionenbildende Diole.

Der Anteil in % bedeutet Gew.-%, bezogen auf die Diole insgesamt.
Bevorzugt wird der Zusatz von hydrophoben Diolen allein mit aliphatischer oder cycloaliphatischer Struktur.

Neben dem Polyethylenglykol mit einem Molekulargewicht $M_z$ bis 2000 können auch Block- oder statistische Copolymere von Ethylenoxid z.B. mit Propylenoxid verwendet werden. Ihr Anteil an den Diolen insgesamt sollte im Bereich von 0 bis 50, bevorzugt von 0,5 bis 30, besonders bevorzugt von 0,7 bis 20 und insbesondere von 1 bis 10 Gew.-% liegen. Konkret seien genannt: Blockcopolymere aus Ethylenoxid (EO) und Propylenoxid (PO) gemäß der folgenden allgemeinen Konstitutionsformel:

$$HO(CH_2CH_2O)_x(CHCH_3\text{-}CH_2\text{-}O)_y(CH_2CH_2O)_zH.$$

Dabei sind x und z in der Regel etwa gleich. X, z und y werden so gewählt, daß die molare Masse des Polypropylenoxidblocks und der prozentuale Anteil an Polyethylenoxid im Gesamtmolekül zum Beispiel folgende Kombinationen ergibt: 950/10, 1100/30, 1750/10, 1750/20, 1750/40, 1750/80, 2300/10, 2750/20, 2750/40, 3250/10 und 3250/50. Auch Blockcopolymere mit einem zentralen Molekülteil aus Ethylenoxid und Seitenteilen aus Propylenoxid sind möglich. So kann beispielsweise die molare Masse des Polyproylenoxidanteils 2500 g/mol und der Anteil an Polyethylenoxid im Molekül 20 %; in einem anderen Beispiel sind die entsprechenden Zahlen: 3100 g/mol und 10 %. Derartige Stoffe sind im Handel unter der Bezeichnung Pluronic PE und RPE erhältlich. Ähnliche Produkte sind unter der Bezeichnung DOWFAX erhältlich. Das Molekulargewicht des hydrophoben Polypropylenoxid-Blockes dieser Blockcopolymeren ist größer als 900, das Molekulargewicht insgesamt liegt im Bereich von 2 000 bis 5 000. Der Gewichtsanteil des Polyethylenoxids liegt im Bereich von 10 bis 40 %.

Das Polyethylenglykol kann vorzugsweise bis zu 20, besonders bevorzugt bis zu 10 %, insbesondere bis zu 5 % durch Diole ersetzt werden, die einen hydrophoben Rest enthalten und deren Wasserlöslichkeit höchstens 2 g/100 g Wasser beträgt. Bei dem hydrophoben Rest Y der Struktureinheit -O-Y-O- handelt es sich um aliphatische oder alicyclische Strukturen vorzugsweise mit 2 bis 44, insbesondere 6 bis 36 C-Atomen. Die Reste können auch aromatische Strukturen enthalten. Die Stellung der beiden OH-Gruppen kann eine gewisse Bedeutung haben, z.B. für die verdickenden bzw. klebtechnischen Eigenschaften. Bevorzugt werden Diole mit mindestens einer primären OH-Gruppe, insbesondere alpha,omega-Diole. Der Kohlenwasserstoff-Rest kann verzweigt oder unverzweigt sein.

Ferner können bis 10, vorzugsweise 0,5 bis 5 % des Polyethylenglykols durch hydrophobe homopolymere Polyalkylenglykole ersetzt werden, wobei die AlkylenGruppe mehr als 2, vorzugsweise 3 und 4 C-Atome hat. Ihre Molekulargewichte betragen insbesondere 150 bis 10 000 g/mol.

Konkrete Beispiele für die hydrophoben Diole mit reinen CH-Resten und mit Ethergruppierungen sind: Polypropylenglykol (PPG), Polybutylenglykol, Polytetrahydrofuran, Polybutadiendiol, hydroxylterminierte Ethyten-Butylen-Copolymere (z.B. KRATON LIQUID Polymer L-2203), hydriertes Polybutadiendiol und Alkandiole mit 4 bis 44 C-Atomen. Bevorzugte hydrophobe Diole sind Polypropylenglykol, Polytetrahydrofuran mit einem Molekulargewicht von 150 bis 10 000, insbesondere 200 bis 4 500, besonders bevorzugt 250 bis 1 000, sowie 1,10-Decandiol, 1,12-Dodecandiol, 1,12-Octadecandiol, Dimerfettsäurediol, 1,2-Octandiol, 1,2-Dodecandiol, 1,2-Hexadecandiol, 1,2-Octadecandiol, 1,2-Tetradecandiol, 4,4'-Isopropylidendicyclohexanol und Isomerengemische, 4,8-Bis(hydroxymethyl)tricyclo [5,2,1,0$^{2,6}$]decane und Isomerengemische, 1,4:3,6-Dianhydro-D-mannitol, 1,4:3,6-Dianhydro-D-sorbitol, 1,16-Hexadecandiol, Bisphenol A sowie deren Prop- und/oder Ethoxylierungsprodukte, insbesondere mit bis zu 30 Molen EO und schließlich Monofettsäureester des Glycerins mit Fettsäuren, welche bis zu 22 C-Atomen enthalten, z.B. Glycerinmonoester der Behensäure, Ölsäure, Stearinsäure, Myristinsäure. Natürlich können auch Mischungen der hydrophoben Diole eingesetzt werden.

Das Polyethylenglykol kann auch bis zu 40 % durch Polyethylenglykol mit einem Molekulargewicht $M_z$ von mehr als 2 000 bis 40 000, insbesondere von 2 500 bis 12 000 und vor allem 3 000 bis 6 000, ersetzt werden.

Das Polyethylenglykol kann ferner in einem Ausmaß von 0 bis 5, insbesondere 0,2 bis 2 % durch höherfunktionelle Alkohole, insbesondere durch Triole ersetzt werden, z.B. durch Glyzerin, Trimethylolpropan, Triethanolamin oder deren ethoxylierte oder propoxylierte Varianten. Auch Pentaerthrit ist brauchbar. Möglich sind auch ethoxylierte oder propoxylierte Varianten von Aminen oder Aminoalkoholen, z.B. ausgehend von Ethylendiamin, Diethylentriamin, und deren höhere Homologe, Aminophenol, N-2-Aminoethylpiperazin.

Das Polyethylenglykol kann weiterhin in einem Ausmaß bis zu 5 Gew.-% durch ionenbildende Diole ersetzt werden, z.B. durch Dimethylolpropionsäure, N-Alkyldiethanolamin bzw. deren quaternisierte Form.

Die genannten Diole sind alle bekannt und zum größten Teil auch käuflich im normalen Chemikalienhandel zu erwerben.

Um ein hochmolekulares Polyurethan zu erhalten, ist selbstverständlich auf die Reinheit der Diole zu achten. So sollte der Gehalt an Alkali- und Erdalkalimetallionen unter 500 ppm, insbesondere unter 150 ppm und vorzugsweise unter 10 ppm liegen .Außerdem sollte der Wassergehalt unter 0,5, insbesondere unter 0,1, bevorzugt unter 0,05 Gew.-% nach K. Fischer liegen. In besonderen Fällen kann der Wassergehalt sogar unter 0,03 Gew.-% liegen.

Das Molverhältnis von Diol zu Diisocyanat sollte möglichst in der Nähe von 1 : 1 liegen, um ein hohes Molekulargewicht zu erzielen. Das Molverhältnis liegt im allgemeinen im Bereich von 2 bis 0,5, bevorzugt von 1,5 bis 0,7 besonders bevorzugt von 1,2 bis 0,9 und insbesondere von 1,15 bis 1,0.

Im allgemeinen sind NCO-Gruppen im Endprodukt unerwünscht. NCO-Gruppen können jedoch verwendet werden, um z.B. hydrophobe oder ionische Strukturelemente einzuführen.

Hydrophobe Strukturelemente können auch durch Reaktion von NCO-terminierten Oligomeren mit Monoolen oder monofunktionellen Aminen mit ≥ 2 C-Atomen, insbesondere ≥ 6, ≥ 10 oder ≥ 16 C-Atomen erhalten werden. Konkret seinen genannt: Poly-Ethylen/Butylen mit 1 OH-Gruppe, z.B. mit einem OH-Äquivalent-Gewicht von 3600 (Kraton L 1203) sowie 1-Hexanol, 1-Heptanol, 1-Octanol, 1-Nonanol, 1-Decanol, 1-Undecanol, 10-Undecen-1-ol, 1-Dodecanol, 1-Tridecanol, 1-Tetradecanol, 1-Pentadecanol, 1-Hexadecanol, 1-Heptadecanol, 1-Octadecanol, 9-cis-Octadecen-1-ol, 9-trans-Octadecen-1-ol, 9-cis-Octadecen-1,12-diol, all-cis-9,12-Octadecadien-1-ol, all-cis-9,12,15-Octadecatrien-1-ol, 1-Nonadecanol, 1-Eicosanol, 9-cis-Eicosen-1-ol, 5,8,11,14-Eicosatetraen-1-ol, 1-Heneicosanol, 1-Docosanol, 13-cis-Docosen-1-ol, 13-trans-Docosen-1-ol. Auch die entsprechenden Fettamine sind als hydrophobierende Strukturelemente möglich.

Eine weitere Möglichkeit zur Einführung von ionenbildenden Strukturelementen ist die Reaktion von OH-terminierten Oligomeren mit Dicarbonsäureanhydriden. Diese können insgesamt 2 bis 44, vorzugsweise 2 bis 12 C-Atome zwischen den Bisacylgruppen als Alkylen-, Alkenylen- oder Arylen-Gruppierung enthalten. Namentlich genannt seien: Bernsteinsäureanhydrid, Glutarsäureanhydrid, 1,2,3,6-Tetrahydrophthalsäureanhydrid und Isomere, Phthalsäureanhydrid, Trimellitsäureanhydrid, 7-Oxabicyclo[2,2,1]hept-5-en-2,3-dicarbonsäureanhydrid, 5-Norbornen-2,3-dicarbonsäureanhydrid und Isomere, cis-4-Cyclohexen-1,2-dicarbonsäureanhydrid und Isomere, Diglykolsäureanhydrid, Maleinsäureanhydrid, Dimethylmaleinsäureanhydrid, Citraconsäureanhydrid, Itaconsäureanhydrid; Alkenylbernsteinsäureanhydride, vorzugsweise solche deren Alkenylgmppen mehr als 2 C-Atome, insbesondere mehr als 5, besonders bevorzugt mehr als 7 C-Atome besitzen. Konkret genannt seien: n-Octenyl-bernsteinsäureanhydrid, n-Dodecenyl-bemsteinsäureanhydrid, Tetrapropenyl-bernsteinsäureanhydrid, n-Hexadecenyl-bemsteinsäureanhydrid und n-Octadecenyl-bemsteinsäureanhydrid. Der Alkenylrest kann linear oder verzweigt aufgebaut sein. Darüber hinaus können auch Mischungen von Alkenylgruppen mit verschiedener Anzahl von C-Atomen vorkommen. Auch Gemische mehrerer Anhydride sind möglich, bevorzugt sind jedoch cyclische Anhydride.

Eine weitere Möglichkeit zur Einführung ionenbildender Strukturen ist schließlich die Reaktion NCO-terminierter Oligomerer mit Hydroxycarbonsäuren oder Aminocarbonsäuren mit Alkylen-, Alkenylen- oder Arylen-Gruppierungen wie bei den Dicarbonsäureanhydriden. Als Beispiele seien genannt: Glykolsäure, Milchsäure, Capronsäure und Mandelsäure sowie Aminocapronsäure, Aminododecansäure, Glycin, Alanin und Phenylatanin.

Wenn auf ein besonders hohes Molekulargewicht Wert gelegt wird, sollte auf bekannte Weise eine Kettenverlängerung vorgenommen werden, indem zunächst Prepolymere mit überschüssigem Diisocyanat hergestellt werden, die dann anschließend mit kurzkettigen Diolen oder Diaminen oder mit Wasser verlängert werden. Als Kettenverlängerer seien konkret genannt:

- die üblichen gesättigten und ungesättigten Glykole, wie Ethylenglykol oder Kondensate des Ethylenglykols, Butandiol-1,3, Butandiol-1,4, 2-Buten-1,4-diol, 2-Butin-1,4-diol, Butendiol, Propandiol-1,2, Propandiol-1,3, Neopentylglykol, Hexandiol, Bis-hydroxymethyl-cyclohexan, Dioxyethoxyhydrochinon, Terephthalsäure-bis-glykolester, Bernsteinsäure-di-2-hydroxyethylamid, Bernsteinsäure-di-N-methyl-(2-hydroxy-ethyl)amid, 1,4-Di(2-hydroxy-methyl-mercapto)-2,3,5,6-tetrachlorbenzol, 2-Methylenpropandiol-(1,3), 2-Methylpropandiol-(1,3); 3-Pyrrolidino-1,2-propandiol, 2-Methylenpentandiol-2,4, 3-Alloxy-1,2-propandiol, 2-Ethylhexan-1,3-diol, 2,2-Dimethylpropandiol-1,3, 1,5-Pentandiol, 2,5-Dimethyl-2,5-hexandiol, 3-Phenoxy-1,2-propandiol, 3-Benzyloxy-1,2-propandiol, 2,3-Dimethyl-2,3-butandiol, 3-(4-Methoxyphenoxy)-1,2-propandiol und Hydroxymethylbenzylalkohol.
- aliphatische, cycloaliphatische und aromatische Diamine wie Ethylendiamin, Hexamethylendiamin, 1,4-Cyclohexylendiamin, Piperazin, N-Methyl-propylendiamin, Diaminodiphenylsulfon, Diaminodiphenylether, Diaminodiphenyldimethylmethan, 2,4-Diamino-6-phenyltriazin, Isophorondiamin, Dimerfettsäurediamin, Diaminodiphenylmethan oder die Isomeren des Phenylendiamins. Weiterhin auch Carbohydrazide oder Hydrazide von Dicarbonsäuren.
- Aminoalkohole wie Ethanolamin, Propanolamin, Butanolamin, N-Methylethanolamin, N-Methyl-isopropanolamin; Diethanolamin, Triethanolamin sowie Di- oder Tri(Alkanolamine).
- aliphatische, cycloaliphatische, aromatische und heterocyclische Mono- und Diaminocarbonsäuren wie Glycin, 1- und 2-Alanin, 6-Aminocapronsäure, 4-Aminobuttersäure, die isomeren Mono- und Diaminobenzoesäuren, die isomeren Mono- und Diaminonaphthoesäuren.

Die erfindungsgemäßen Polyurethane können sowohl in einem einstufigen als auch in einem zweistufigen Verfahren hergestellt werden. In dem zweistufigen Verfahren wird zunächst ein Prepolymeres hergestellt, indem ein Teil der Polyole, z.B. die hydrophilen, mit dem Diisocyanat vorreagieren. Dann wird das nächste Polyol zugesetzt. Es ist auch möglich, das Polyurethan so aufzubauen, daß die Polyole oder ein Teil der Polyole zunächst mit einem Diisocyanat vorreagieren. Der weitere Molekularaufbau findet dann mit einem oder mehreren anderen Diisocyanaten statt.

Vorzugsweise wird das erfindungsgemäße Polyurethan jedoch in einem einstufigen Verfahren hergestellt. Dabei werden zunächst alle Ausgangsstoffe in Gegenwart eines organischen Lösungsmittels, vorzugsweise jedoch ohne organisches Lösungsmittel bei einem Wassergehalt von weniger als 0,5 Gew.-% gemischt. Die Mischung wird auf 70 bis 200 °C, insbesondere auf 75 bis 150 °C, vorzugsweise auf 80 bis 110 °C und besonders bevorzugt auf 85 bis 100 °C ca. 1 bis 30 Stunden erhitzt.

Die Reaktionszeit kann durch Anwesenheit von Katalysatoren verkürzt werden. Insbesondere sind tertiäre Amine brauchbar, z.B. Triethylamin, 1,4-Diazabicyclo[2,2,2]octan (= DABCO) Dimethylbenzylamin, Bis-Dimethylaminoethylether und Bis-Methylaminomethylphenol. Besonders geeignet sind 1-Methylimidazol, 2-Methyl-1-vinylimidazol, 1-Allylimidazol, 1-Phenylimidazol, 1,2,4,5-Tetramethylimidazol, 1(3-Aminopropyl)imidazol, Pyrimidazol, 4-Dimethylamino-pyridin, 4-Pyrrolidinopyridin, 4-Morpholino-pyridin, 4-Methylpyridin. Es können auch zinnorganische Verbindungen als Katalysatoren eingesetzt werden. Darunter werden Verbindungen verstanden, die sowohl Zinn als auch einen organischen Rest enthalten, insbesondere Verbindungen, die eine oder mehrere Sn-C-Verbindungen enthalten. Zu den zinnorganischen Verbindungen im weiteren Sinne zählen z.B. Salze wie Zinnoctoat und Zinnstearat. Zu den Zinnverbindungen im engeren Sinne gehören vor allem Verbindungen des vierwertigen Zinns der allgemeinen Formel $R_{n+1}SnX_{3-n}$, wobei n eine Zahl von 0 bis 2 ist, R eine Alkylgruppe und/oder eine Arylgruppe darstellt und X schließlich eine Sauerstoff-, Schwefel- oder Stickstoff-Verbindung bedeutet. Zweckmäßigerweise enthält R mindestens 4 C-Atome, insbesondere mindestens 8. Die Obergrenze liegt in der Regel bei 12 C-Atomen. Vorzugsweise ist n = 0 oder 1 sowie eine Mischung von 1 und 0. Vorzugsweise ist X eine SauerstoffVerbindung, also ein zinnorganisches Oxid, Hydroxyid, Carboxylat oder Ester einer anorganischen Säure. X kann aber auch eine Schwefel-Verbindung sein, also ein zinnorganisches Sulfid, Thiolat oder Thiosäureester. Bei den Sn-S-Verbindungen sind vor allem Thioglykolsäureester interessant, z.B. Verbindungen mit folgenden Resten:

- $S - CH_2 - CH_2- CO - O -(CH_2)_{10} CH_3$ oder
- $S - CH_2 - CH_2 - CO - O - CH_2 - CH(C_2H_5) - CH_2- CH_2- CH_2- CH_3$.

Derartige Verbindungen erfüllen eine weitere Auswahlregel: Das Molekulargewicht der zinnorganischen Verbindung soll vorzugsweise über 250, insbesondere über 600 liegen.

Eine bevorzugte Verbindungsklasse stellen die Dialkyl-ZinnIV-Carboxylate dar (X = O - CO - R[1]). Die Carbonsäuren haben 2, vorzugsweise wenigstens 10, insbesondere 14 bis 32 C-Atome. Es können auch Dicarbonsäuren eingesetzt werden. Als Säuren seien ausdrücklich genannt: Adipinsäure, Maleinsäure, Fumarsäure, Terephthalsäure, Phenylessigsäure, Benzoesäure, Essigsäure, Propionsäure sowie insbesondere Capryl-, Caprin-, Laurin-, Myristin-, Palmitinund Stearin-Säure. Konkrete Verbindungen sind Dibutylzinn-diacetat und -dilaurat sowie Dioctylzinn-diacetat und -dilaurat. Auch Zinnoxide und -sulfide sowie -thiolate sind bevorzugt brauchbar. Konkrete Verbindungen sind: Bis(tributylzinn) oxid, Dibutylzinndidodecylthiolat-, Dioctylzinndioctylthiolat, Dibutylzinn-bis(thioglykolsäure-2-ethyl-hexylester), Octylzinn-tris-(thioglykolsäure-2-ethyl-hexylester), Dioctylzinn-bis(thioethylenglykol-2-ethylhexoat), Dibutylzinn-bis(thioethylenglykollaurat), Dibutylzinnsulfid, Dioctylzinnsulfid, Bis(tributylzinn)sulfid, Dibutylzinn-bis(thioglykolsäure-2-ethylhexylester), Dioctylzinn-bis(thioglykolsäure-2-ethylhexylester), Octylzinn-tris(thioglykolsäure-2-ethylhexylester), Dioctylzinn-bis(thioethylenglykol-2-ethylhexoat), Tributyl- und Dibutylzinn-bis(thioethylenglykollaurat), Dioctylzinndidodecylthiolat, Dioctylzinnbis(thioethylenglykol-2-ethylhexoat), Trioctylzinnthioethylenglykol-2-ethylhexoat) sowie Dioctylzinn-bis(thiolatoessigsure-2-ethylhexylester), Bis(ss-methoxycarbonyl-ethyl)zinn-bis(thiolatoessigsäure-2-ethylhexylester), Bis(ss-acetyl-ethyl)zinnbis(thiolatoessigsäure-2-ethyl-hexylester), Zinn(II)octylthiolat und Zinn(II)-thioethylenglykol2-ethylhexoat.

Außerdem seien noch genannt: Dibutylzinndiethylat, Dihexylzinndihexylat, , Dibutylzinndiacetylacetonat, Dibutylzinndiethyl-acetylacetat, Bis(butyldichlorzinn)oxid, Bis(dibutylchlorzinn)sulfid, Zinn(II)phenolat, Zinn(II)-acetylacetonat, wobei als weitere β-Dicarbonylverbindungen genannt seien: Acetylaceton, Dibenzoylmethan, Benzoylaceton, Acetessigsäureethylester, Acetessigsäure-n-propylester, alpha,gamma-Diphenyl-acetessigsureethylester und Dehydraacetsäure.

Der Katalysator wird vorzugsweise dem Polyol zugesetzt. Seine Menge richtet sich nach seiner Aktivität und den Reaktionsbedingungen. Sie liegt vorzugsweise im Bereich von 0,001 bis 0,5 Gew.-%, bezogen auf das Polyol.

Vorzugsweise wird jedoch ohne Katalysator gearbeitet. Auch das Lösungsmittel wird zweckmäßigerweise weggelassen. Darunter werden inerte organische flüssige Stoffe mit einem Siedepunkt unter 200 °C bei Normaldruck verstanden.

Aufgrund der Wasserlöslichkeit der erfindungsgemäßen Polyurethane lassen sich sehr leicht wäßrige Lösungen bzw. Dispersionen herstellen, indem man z.B. bei Temperaturen unter 100 °C Wasser zusetzt, bis zur Homogenität der Mischung rührt und unter Rühren auf 20 °C abkühlt. Dabei kann es unter Umständen sinnvoll sein, den Lösungen zur Stabilisierung noch lösungsvermittelnde Agenzien zuzusetzen, z.B. hochsiedende Lösungsmittel oder Tenside wie Aniontenside, Kationtenside, Niotenside oder Amphotenside. Die Menge dieser Lösungsvermittler liegt im Bereich von 0,01 bis 100, insbesondere von 0,05 bis 20 Gew.-%, bezogen auf die Polyurethan-Lösung. Konkrete Beispiele sind: Quartäre Ammonium-Verbindungen der allgemeinen Formel: $(R_4N^+)X^-$, z.B. Dimethyldistearylammoniumchlorid und Imidazolinium-Verbindungen oder Alkylarensulfonate (z.B. Dodecylbenzolsulfonat), Alkansulfonate, Olefinsulfonate, Alkylsulfate, Ampholyte, Betaine, Fettalkoholethersulfate, $\alpha$-Estersulfonate, Alkylphosphate, Alkyletherphosphate, Aminoxide, Zuckertenside, Kondensationsprodukte aus Eiweißhydrolysaten und Fettsäuren, Sulfosuccinate, Seifen, z.B. Harzseifen, Glykole, Polyethylenglykol, Zucker, Glycerin und Glykolether, Alkylpolyglykoside, Tributylphosphat, Polyvinylalkohol, Polyvinylpyrrolidon, Polyvinylmethylether, Maltodextrine, wobei das Dextroseäquivalent größer als 2, insbesondere größer als 5 und vor allem größer als 10 ist, Sorbit, 2,4,7,9-Tetramethyl-5-decin-4,7-diol und dessen Ethoxylierungsprodukte, Glycerinmonoester von Fettsäuren mit bis zu 22 C-Atomen, z.B. mit Behensäure, Ölsäure, Stearinsäure und Myristinsäure, EO-/PO-Addukte des Bisphenol A, Triacetin und Saccharin.

Besonders wichtig sind Niotenside. Als Niotenside im Sinne der Erfindung sind Verbindungen zu verstehen, die aus einer oder mehreren hydrophoben und einer oder mehrerer nichtionischer hydrophiler Gruppen bestehen. Bei den hydrophoben Gruppen handelt es sich vorzugsweise um ggf. substituierte KohlenwasserstoffReste. Beispielhaft für nichtionische hydrophile Gruppen seien Polyethylenoxidoder Polyglycerin-Reste genannt. Als Niotenside eignen sich z.B. Fettalkoholethoxylate, Alkylphenolethoxylate, Fettsäureamidethoxylate, Fettsäureaminethoxylate, alkoxylierte Triglyceride mit OH-Gruppen, Alk(en)yloligoglykoside, Fettsäureglucamide oder Partial-Ester von polymerisiertem Glycerin, ethoxyliertes Ricinusöl mit 20 bis 400 Gew.-%, bevorzugt 40 bis zu 200 Gew.-% EO-Gehalt, bezogen auf nicht ethoxyliertes Ricinusöl oder mit Alkoholen bzw. Carbonsäuren ringgeöffnetes, epoxidiertes Sojaöl, das im Anschluß an die Ringöffnung mit Alkylenoxiden, vorzugsweise Ethylenoxid bis zu einem Gehalt von 20 bis 400 Gew.-%, bevorzugt 40 bis 200 Gew.-% Alkylenoxid, bezogen auf das nicht alkoxylierte Ausgangsprodukt, umgesetzt wurde. Die Hydroxyl-Zahlen der erfindungsgemäßen Tenside liegen im Bereich von 10 bis 200, bevorzugt im Bereich von 30 bis 100.

Besonders sei auf folgende Niotenside hingewiesen. EO-Addukte an lineare oder verzweigte Monoole mit 6 bis 44, insbesondere 6 bis 22 C-Atomen sowie mit bis zu 50 EO-Einheiten, insbesondere mit bis zu 30 EO-Einheiten. Konkrete Beispiele sind: Oleyl-Cetylalkohol-2EO, Oleyl-Cetylalkohol-5EO, Oleyl-Cetylalkohol-10EO, Oleyl-Cetylalkohol-7EO, Tallölfettsäure-3EO, Tallölfettsäure-5,5EO, Rizinusöl-5EO, Rizinusöl-11EO, Rizinusöl-20EO, Rizinusöl-40EO, Fettalkohol $C_{12}$-$C_{18}$-2EO, Fettalkohol $C_{12}$-$C_{18}$-3EO, Fettalkohol $C_{12}$-$C_{18}$-5EO, Fettalkohol $C_{12}$-$C_{18}$-6,5EO, Fettalkohol $C_{12}$-$C_{18}$-7EO, Fettalkohol $C_{16}$-$C_{18}$-5EO, Fettalkohol $C_{16}$-$C_{18}$-10EO, Fettalkohol $C_{16}$-$C_{18}$-12EO, Fettalkohol $C_{16}$-$C_{18}$-14EO, Fettalkohol $C_{16}$-$C_{18}$-20EO, Fettalkohol $C_{16}$-$C_{18}$-29EO, Fettalkohol $C_{16}$-$C_{18}$-30EO, Decylalkohol-3EO,

Octylalkohol-4EO, Fettalkohol $C_8$-$C_{14}$-4EO, Fettalkohol $C_{12}$-$C_{18}$-9EO, Guerbetalkohol $C_{20}$- 2EO, Guerbetalkohol $C_{20}$-5EO, Decylalkohol-3EO, Fettalkohol $C_{10}$-$C_{14}$-6EO, Fettalkohol $C_{12}$-$C_{14}$-2EO, Fettalkohol $C_{12}$-$C_{14}$-3EO, Fettalkohol $C_{12}$-$C_{14}$-4EO, Fettalkohol $C_{16}$-$C_{18}$-8EO, Fettalkohol $C_{16}$-$C_{18}$-11EO.

Außerdem seien genannt: EO-PO-Addukte an lineare oder verzweigte Monoole, Fettsäureethanolamide und deren ethoxylierte oder propoxylierte Varianten, die bereits genannten EO/PO-Copolymere wie z.B. "Pluronic" und DOWFAX sowie Propylenglykolether, z.B. Mono-, Di- und Tripropylenglykol-Monoether von Methanol, Ethanol, Propanol und n-Butanol sowie von Phenol. Auch Ethylenglykol-Phenylether ist brauchbar. Natürlich können auch Mischungen dieser Agenzien eingesetzt werden.

Zum Schutze vor oxidativen Veränderungen können den Polymeren oder deren Lösungen noch Antioxidantien zugesetzt werden. Zum Schutz der wäßrigen Lösung vor Verkeimung können zusätzlich noch Konservierungsmittel zugesetzt werden. Als weitere Zusätze seien genannt: Weichmacher, Harze, Entschäumer, UV-Stabilisatoren, Viskositätsregler, Duftstoffe, Farbstoffe, Füllstoffe, Dispersionen und Polymerlösungen von Polyacrylaten, Polyacrylamide, Polyvinylpyrrolidon, Polyvinylacetaten, Ethylen-Vinylacetat-Copolymeren, Polybutadienen, Polyisoprenen und Copolymeren mit Styrol, insbesondere Copolymeren aus Butadien, Ethylen und Styrol, Polychloroprenen, modifizierten Polysacchariden wie z.B. Carboxymethylcellulosen, Methylcellulosen, Hydroxyethylcellulosen und Carboxymethylstärke. Die Menge derartiger Zusätze schwankt in weiten Bereichen, nämlich von 0,01 bis 100, insbesondere von 0,01 bis 30 Gew.-%, bezogen auf die Polyurethan-Lösung.

Der wichtigste Zusatzstoff ist jedoch Wasser. Er ermöglicht eine leichte Applikation. Der Wassergehalt des wäßrigen Systems, also der Lösung bzw. Dispersion kann bis zu 98 Gew.-% betragen, vorzugsweise liegt er im Bereich von 20 bis 80, insbesondere von 30 bis 70 Gew.-%, bezogen auf den Haftklebstoff insgesamt.

Der erfindungsgemäße Klebstoff wird vorzugsweise aus einem wäßrigen System appliziert. Er kann jedoch auch aus der Schmelze oder aus einer organischen Lösung aufgetragen werden.

Eine Rahmen-Rezeptur für ein wäßriges Klebstoff-System umfaßt folgende Komponenten in den angegebenen Mengenbereichen: 30 bis 90 % erfindungsgemäßes Polyurethan, 0 bis 35 % Dispersions-Klebstoffe, 0 bis 10 % lösungsvermittelnde Agenzien, 0 bis 10 % Viskositätsregler, 0 bis 5 % Füllstoff, 0 bis 2 % Entschäumungsmittel und bis 0,5 % Konservierungsmittel sowie restliche Mengen an Wasser.

Als Rahmen-Rezeptur für die Verwendung als Schmelzhaftklebstoff kann angegeben werden:

- 50 bis 100 Gew.-% an erfindungsgemäßen Polyurethanen,
- 0 bis 30 Gew.-% an Klebrigmachern,
- 0 bis 30 Gew.-% an Wachsen.

Die erfindungsgemäßen Klebstoffe eignen sich insbesondere zum Verkleben von Kunststoff-Oberflächen mit Papier, insbesondere mit Papier-Etiketten. Als Kunststoffe kommen insbesondere solche in Frage, die eine Oberflächenenergie von weniger als 35 $mJm^{-2}$ haben. Konkret seien genannt: Polystyrol, Polycarbonat, Polyvinylchlorid, Polyethylterephthalat und Polyolefine, also Homo- und/oder Copolymere von Ethylen, Propylen, 1-Buten und Styrol, insbesondere Polyethylen und Polypropylen sowie deren Gemische. Es war besonders überraschend, daß ein hydrophiler Haftklebstoff auch auf Polyethylen und Polypropylen eine ausreichende Haftung erzeugt, und zwar sowohl sofort am Anfang als auch am Ende der Verklebung. Die zu beklebenden Formteile können durchgehend aus Kunststoff sein, z.B. Kunststoffbehälter wie Flaschen, Dosen, Eimer, Becher usw.. Sie können aber auch nur eine Kunststoff-Oberfläche haben und im übrigen aus Metall, Glas oder Holz sein, z.B. Weißblech-Dosen, beschichtete Glasflaschen, lackiertes Holz usw..

Unter Papier wird ein flächiger Werkstoff verstanden, der im wesentlichen aus Fasern, vorwiegend pflanzlicher Herkunft besteht. Das Flächengewicht beträgt im allgemeinen bis zu 225 $g/m^2$. Es kann aber auch darüber hinausgehen (Karton oder Pappe). Das Papier kann auch beschichtet sein, z.B. mit Aluminium oder einer Kunststoffschicht. Welche besonderen Anforderungen an Papiere für Papier-Etiketten zu stellen sind, geht aus der Veröffentlichung von K. Dullinger hervor "Etikettiertechnik von A bis Z" Zeitschrift für Lebensmitteltechnik, 1987, Seiten 503 bis 507.

Unter einem Etikett ist ein Schildchen mit einer Information zu verstehen, das auf einem Gegenstand aufgeklebt wird. Es ist in den überwiegenden Fällen aus Papier, kann aber auch aus Kunststoff oder beidem sein.

Der erfindungsgemäße Klebstoff ist also sehr gut zum Etikettieren insbesondere von Kunststoffoberflächen zu verwenden. Aber auch Gegenstände aus Metall, Glas, Holz und Pappe sind leicht zu etikettieren.

Zur Etikettierung von Flaschen aus Polyolefinen mit Papieretiketten ist es zweckmäßig, daß man

a) ein 50%iges wäßriges System aus dem erfindungsgemäßen Klebstoff herstellt,

b) das wäßrige System in einer Menge von 100 $g/mm^2$ auf die Papier-Etiketten aufträgt,

c) das beleimte Papier-Etikett im feuchten Zustand (innerhalb von 10 Sek.) bei Temperaturen von 10 bis 40 °C auf die Flasche drückt und

d) das anhaftende Etikett bei Raumtemperatur trocknet.

Im allgemeinen wird jedoch der erfindungsgemäße Klebstoff verwendet, indem man

a) ein wäßriges System, eine organische Lösung oder eine Schmelze aus dem erfindungsgemäßen Klebstoff auf mindestens eines der beiden zu verklebenden Substrate aufträgt,

b) das beschichtete Substrat trocknet oder abkühlt und

c) das getrocknete oder abgekühlte Substrat mit dem zweiten zu verklebenden Substrat zusammendrückt.

Der erfindungsgemäße Haftklebstoff zeichnet sich durch folgende bemerkenswerte Eigenschaften aus:

- Temperaturstabilität der wäßrigen Formulierung oberhalb 30 °C,
- hohe Klebkraft von Papieretiketten auf Polyolefinoberflächen wie PE oder PP,
- Möglichkeit des Einsatzes auf schnellaufenden Maschinen,
- weitgehende Vermeidung von Flecken, wie sie von Fetten bekannt sind,
- vielseitige Auftragungsmöglichkeiten, nämlich aus der Schmelze, als wäßriges System und als Lösung in einem organischen Lösungsmittel,
- Wasserlöslichkeit: bis zu 980 g Klebstoff/l Wasser bei 20 °C.
- hohe Anfangshaftung auch bei einem wäßrigen System ohne Trocknung (hohe Naßklebkraft).

Die Erfindung wird nun anhand von Beispielen im einzelnen beschrieben:

Beispiele:

1. Herstellung des Polyurethans

Beispiel 1

94 Gew.-Teile Polyethylenglykol (PU-Qualität) mit einem Molgewicht von 600 (PEG 600) und 3,9 Gew.-Teile 1,12-Octadecandol werden zwei Stunden bei 80 °C und 1 mbar entwässert. Nach Zugabe von 38,5 Gew.-Teilen Desmodur V44M (4,4'-MDI) wird unter Stickstoffzuleitung die Reaktionstemperatur auf 90 °C erhöht. Nach ca. 3 Stunden Reaktionszeit hat der NCO-Wert 0 % erreicht. Die Substanz besitzt nun eine Schmelzviskosität von ca. 97000 mPas bei 100 °C. Eine 50 %ige wäßrige Formulierung besitzt eine Lösungsviskosität von 82000 mPas bei 22 °C.

Beispiel 2 bis 6

Analog dem in Beispiel 1 geschilderten Verfahren wurden die in der folgenden Tabelle 1 aufgeführten Polyurethane hergestellt.

Dabei bedeuten:

- TMP = Trimethylolpropan
- PEG 3000 = Polyethylenglykol mit einem Molekulargewichzt von 3000
- PEG 6000 = Polyethylenglykol mit einem Molekulargewicht von 6000
- Drivanil 25 - 250 = hochmolekulare EO/PO-Addukt
- Lupranat MIS = MDI-Isomeren-Gemisch

Beispiel 7:

Analog zu Beispiel 1 werden 63,7 Gew.-Teile PEG 600 entwässert und mit 21,8 Gew.-Teile 4,4'-MDI zur Reaktion gebracht. Nachdem der NCO-Wert 0 % erreicht hat, werden 10,6 Gew.-Teile TMXDI, 3,9 Gew.-Teile Dimethylolpropionsäure und 0,05 Gew.-Teile Dibutylzinndilaurat hinzugefügt und bei 120 °C bis zum Maximum der Schmelzviskosität (NCO-Wert 0 %) reagieren gelassen. Die Substanz besitzt nun eine Säurezahl von 18 und eine Schmelzviskosität von 144000 mPas bei 130 °C. 100 Gew.-Teile einer 50 %igen wäßrige Formulierung werden mit 2,5 Gew.-Teilen einer 50 Gew-%igen Natronlauge versetzt. Die Klebkraft PE/Papier wird mit - bewertet.

Beispiel 8:

Analog zu Beispiel 1 werden 59,9 Gew.-Teile PEG 600 und 5,8 Gew.-Teile PEG 6000 entwässert und mit 20,6 Gew.-Teile 4,4'-MDI zur Reaktion gebracht. Nachdem der NCO-Wert 0 % erreicht hat, werden 10 Gew.-Teile TMXDI und 3,7 Gew.-Teile Dimethylolpropionsäure und 0,05 Gew.-Teile Dibutylzinndilaurat hinzugefügt und bei und bei 140 °C bis zum Maximum der Schmelzviskosität (NCO-Wertes 0 %) reagieren gelassen. Die Substanz besitzt nun eine Säurezahl von 17,5 und eine Schmelzviskosität von 128000 mPas bei 140 °C. 100 Gew.-Teile einer 50 %igen wäßrigen Formulierung werden mit 1,1 Gew.-Teilen einer 50 Gew.-%igen Natronlauge versetzt und besitzt eine Lösungsviskosität von 160000 mPas bei 22 °C. Die Klebkraft PE/Papier wird mit + bewertet.

Beispiel 9:

Analog zu Beispiel 1 werden 56,5 Gew.-Teile PEG 600 und 5,6 Gew.-Teile PEG 6000 entwässert und mit 20,2 Gew.-Teile 4,4'-MDI zur Reaktion gebracht. Nachdem der NCO-Wert 0 % erreicht hat, werden 9,9 Gew.-Teile TMXDI und 3,6 Gew.-Teile Dimethylolpropionsäure hinzugefügt und bei 125 °C bis zum erneuten Erreichen des NCO-Wertes von 0 % reagieren gelassen. Die Substanz besitzt nun eine Schmelzviskosität von 118000 mPas bei 150 °C. 100 Gew. -Teile einer 50 %igen wäßrigen Formulierung werden mit 1,3 Gew.-Teilen einer 50 Gew-%igen Natronlauge versetzt und besitzt eine Lösungsviskosität von 366000 mPas bei 22 °C. Die Klebkraft PE/Papier wird mit + bewertet.

Beispiel 10:

Analog zu Beispiel 1 werden 61,3 Gew.-Teile PEG 600, 5,5 Gew.-Teile PEG 6000 entwässert und mit 20,2 Gew.-Teile 4,4'-MDI zur Reaktion gebracht. Nachdem der NCO-Wert 0 % erreicht hat, werden 9,8 Gew.-Teile TMXDI und 3,2 Gew.-Teile N-Methyl-diethanolamin hinzugefügt und bei 110 °C bis zum erneuten Erreichen des NCO-Wertes von 0 % reagieren gelassen. Die Substanz besitzt nun eine Schmelzviskosität von 26000 mPas bei 150 °C. Eine 53 %ige wäßrige Formulierung besitzt eine Lösungsviskosität von 60000 mPas bei 23 °C. Die Klebkraft PE/Papier wird mit + bewertet.

Beispiel 11:

Analog zu Beispiel 1 werden 61,4 Gew.-Teile PEG 600, 6,9 Gew.-Teile PEG 6000, 3,9 Gew.-Teile Dianol 340 entwässert und mit 25,6 Gew.-Teile 4,4'-MDI zur Reaktion gebracht. Nachdem der NCO-Wert 0 % erreicht hat, werden 2,3 Gew.-Teile Bernsteinsäureanhydrid hinzugefügt und bei 110 °C bis zum Erreichen einer Säurezahl von 12 reagieren gelassen. Die Substanz besitzt nun eine Schmelzviskosität von 87000 mPas bei 110 °C. Eine 54 %ige wäßrige Formulierung besitzt eine Lösungsviskosität von 160000 mPas bei 23 °C. Die Klebkraft PE/Papier wird mit ++ bewertet.

Beispiel 12 bis 38

Analog zu dem in Beispiel 1 geschilderten Verfahren wurden die in der folgenden Tabelle 2 aufgeführten Polyurethane hergestellt.

**Tabelle 1:** Zusammensetzung der Polyurethane sowie deren Eigenschaften

| Bei- spiel Nr. | Zusammensetzung | Gewichtsteile | Schmelzviskosi- tät [mPas] | Lösungs- viskosität [mPas] | Kleb- Kraft PE/Papier |
|---|---|---|---|---|---|
| 1 | PEG 600/1,12-Octadecandiol/Desmodur V44M | 69:3:28 | 32000 (125 °C) | 82000 | ++ |
| 2 | PEG 600/1,12-Octadecandiol/TMP/Desmodur V44M | 66:4:1:29 | 19000 (125 °C) | 60000 | + |
| 3 | PEG 600/1,12-Octadecandiol/PEG 3000 Desmodur V44M | 66,3:3,5:3,2:27 | 40000 (90 °C) | 188000 | + |
| 4 | PEG 600/1,12-Octadecandiol/PEG 6000/ Desmodur V44M | 64,8:2,7:6,6:25,9 | 69000 (90 °C) | 158000 | ++ |
| 5 | PEG 600/1,12-Octadecandiol/Drivanil 25-250/Desmodur V44M | 65,3:3,5:3,3:27,9 | 150000 (90 °C) | 960000 | ++ |
| 6 | PEG 600/1,12-Octadecandiol/Lupranat MIS | 67,2:2,9:29,9 | 134000 (90 °C) | 140000 | + |

Tabelle 2: Zusammensetzung der Polyurethane sowie deren Eigenschaften

| Bei-spiel Nr. | Zusammensetzung | Gewichtsteile | Schmelz-viskosität [mPas] | Lösungs-viskosität [mPas] | Klebkraft PE/ Papier |
|---|---|---|---|---|---|
| 12 | PEG 600/Pluronic PE 6400/Dianol 340/Desmodur V44M | 66,3:3:4:26,7 | 83000 (90 °C) | 66000 | + |
| 13 | PEG 600/Pluronic PE 6800/Dianol 340/Desmodur V44M | 63,6:6,9:3,9:25,6 | 90000 (90 °C) | 66000 | + |
| 14 | PEG 600/Pluronic PE 6400/Dianol 340/Desmodur V44M | 66,3:3:4:26,7 | 83000 (90 °C) | 66000 | + |
| 15 | PEG 600/Pluronic PE 9400/Dianol 340/Desmodur V44M | 65,7:3,8:5,1:25,5 | 28000 (110 °C) | 20000 | + |
| 16 | PEG 600/Pluronic PE 10500/Dianol 340/Desmodur V44M | 63,6:6,9:3,9:25,6 | 119000 (90 °C) | 152000 | + |
| 17 | PEG 600/PEG 6000/Dianol 240/Desmodur V44M | 63,9:6,9:3,5:25,7 | 124000 (90 °C) | 27000 | ++ |
| 18 | PEG 600/PEG 6000/Dianol 320/Desmodur V44M | 64,2:7:3:25,8 | 71000 (110 °C) | 46000 | ++ |
| 19 | PEG 600/PEG 6000/Dianol 340/Desmodur V44M | 63,6:6,9:3,9:25,6 | 74000 (110 °C) | 96000 | ++ |
| 20 | PEG 600/PEG 6000/PTHF 250/Desmodur V44M | 65:7:2:26 | 100000 (90 °C) | 35000 | + |
| 21 | PEG 600/PEG 6000/PTHF 650/Desmodur V44M | 63:6,7:5:25,3 | 70000 (110 °C) | 100000 | ++ |
| 22 | PEG 600/TMXDI | 72,5:27,5 | 7500 (110 °C) | 800 | -- |
| 23 | PEG 600/PEG 6000/Dianol 340/Lupranat MIS | 61,6:6,5:7,6:26,8 | 16000 (110 °C) | 58000 | ++ |

Fortsetzung Tabelle 2

| 24 | PEG 600/Pluronic PE 9400/Dianol 340/1,12-Octadecandiol/Desmodur V44M | 64,2:5:3,7:1:25,5 | 74000 (110 °C) | 24000 | + |
|---|---|---|---|---|---|
| 25 | PEG 600/PEG 12000/PTHF 650/Desmodur V44M | 63,1:6,7:5:25,2 | 106000 (90 °C) | 79000 | ++ |
| 26 | PEG 600/PEG 6000/PTHF 250/Desmodur V44M | 61,2:6,5:4,9:27,4 | 139000 (90 °C) | 108000 | ++ |
| 27 | PEG 600/PEG 6000/PPG 2000/Desmodur V44M | 60,2:6:10,1:23,7 | 79800 (110 °C) | 124000 | - |
| 28 | PEG 600/Desmodur V44M | 73:27 | 102000 (110 °C) | 28000 | ++ |
| 29 | PEG 600/PEG 6000/Desmodur V44M | 68:6,7:25,3 | 140000 (110 °C) | 150000 | ++ |
| 30 | PEG 600/PEG 6000/1,12-Octadecandiol/Desmodur V44M | 64:6,7:2,7:26,6 | 89000 (110 °C) | 380000 | ++ |
| 31 | PEG 600/PEG 6000/4,8-Bis(hydroxymethyl)tricyclo[5.2.1.0$^{2.6}$]decan/Desmodur V44M | 61,9:6,6:4:27,5 | 96600 (110 °C) | 448000 | ++ |
| 32 | PEG 600/Pluronic PE 6800/Dianol 340/Desmodur V44M | 55,7:17,2:4,1:23 | 26000 (110 °C) | 31000 | + |
| 33 | PEG 600/PEG 6000/4,4'-UsIsopropylidendicyclohexanol/Desmodur V44M | 62,4:6,6:4:27 | 101000 (110 °C) | >1000000 | ++ |

EP 1 021 476 B1

Fortsetzung Tabelle 2

| 34 | PEG 600/PEG 6000/PTHF 1000/Desmodur V44M | 55,6:10,5:10,5:23,4 | 74000 (100 °C) | 156000 | + |
|---|---|---|---|---|---|
| 35 | PEG 600/PEG 6000/1,2-Dodecandiol/Desmodur V44M | 60,3:10,1:3,4:26,2 | 91000 (110 °C) | 216000 | ++ |
| 36 | PEG 600/PEG 6000/Dianol 340/1,2-Dodecandiol/ Desmodur V44M | 53,7:10,8:5,4:3: 27,1 | 119000 (110 °C) | >1000000 | + |
| 37 | PEG 200/PEG 600/PEG 6000/Dianol 340/Desmodur V44M | 5:52,4:9,8:5:27,8 | 83000 (110 °C) | 290000 | ++ |
| 38 | PEG 600/PEG 6000/PTHF 250/Dianol 340/Desmodur V44M | 51,6:10,3:5,1:5,1: 27,9 | 143000 (120 °C) | >1000000 | ++ |

EP 1 021 476 B1

Dabei bedeuten:

- Dianol 240 = Addukt von 4 Mol Ethylenoxid an Bisphenol A
- Dianol 320 = Addukt von 2 Mol Propylenoxid an Bisphenol A
- Dianol 340 = Addukt von 4 Mol Propylenoxid an Bisphenol A
- PTHF 250 = Polytetrahydrofuran mit einem mittleren Molekulargewicht von 250
- PTHF 650 = Polytetrahydrofuran mit einem mittleren Molekulargewicht von 650
- PTHF 1000 = Polytetrahydrofuran mit einem mittleren Molekulargewicht von 1000
- PEG 200 = Polyethylenglykol mit einem mittleren Molekulargewicht von 200
- Pluronic PE 6400 = EOx-POy-EOz-Blockcopolymer mit einer mittleren molaren Masse des Polypropylenoxidblocks von 1750 und einem prozentualen Anteil an Polyethylenoxid im Gesamtmolekül von 40
- Pluronic PE 6800 = EOx-POy-EOz-Blockcopolymer mit einer mittleren molaren Masse des Polypropylenoxidblocks von 1750 und einem prozentualen Anteil an Polyethylenoxid im Gesamtmolekül von 80
- Pluronic PE 9400 = EOx-POy-EOz-Blockcopolymer mit einer mittleren molaren Masse des Polypropylenoxidblocks von 2750 und einem prozentualen Anteil an Polyethylenoxid im Gesamtmolekül von 40
- Pluronic PE 10500 = EOx-POy-EOz-Blockcopolymer mit einer mittleren molaren Masse des Polypropylenoxidblocks von 3250 und einem prozentualen Anteil an Polyethylenoxid im Gesamtmolekül von 50
- TMXDI = Tetramethylxylylendiisocyanat

## 2. Eigenschaften und Anwendungen

Alle Klebstoffe waren haftklebrig über einen Zeitraum von mehr als 6 Monaten. Alle Klebstoffe waren in Wasser von 20 °C innerhalb von 24 Std. löslich, d.h., es lösten sich mehr als 30 g, vorzugsweise mehr als 40 g in 100 g Wasser. Die beschichtete Glasplatte war mehrfach zu verkleben. Der Kristallisationsgrad lag unter 20 %. Die klebetechnische Anwendung umfaßte folgende Varianten:

a) Mit der wäßrigen Lösung von 500 g Klebstoff/l wurde Papier beschichtet (100 g Klebstoff/m$^2$ Papier). Nach der Trocknung (20 °C, 65 % rel. Luftfeuchtigkeit, 48 Std.) wurden die Papierstücke mit leichtem Druck auf die Glasplatten geklebt. Nach 2 Tagen wurde die Klebkraft bestimmt.

b) Mit der gleichen wäßrigen Lösung wie in a) wurde das gleiche Papier beschichtet. Es wurde jedoch sofort - also ohne Trocknung - ein zweites Papier mit leichtem Druck darauf geklebt.

c) Mit dem wasserfreien Klebstoffsystem von 100 °C bis 160 °C wurde eine Glasplatte beschichtet.

## 3. Meßmethoden

a) Lösungsviskosität (50 %ig in voll entsalztem Wasser): Brookfield (Spindel 7; 20 U/min) bei 22 °C.

b) Schmelzviskosität: ICI cone and plate, CAP 2000 VISCOSIMETER der Fa. Brookfield.

c) Verklebung von Papieretiketten auf Polyethylenflaschen aus wäßriger Lösung analog zur klebetechnischen Anwendung 2b). Nach dreitägiger Lagerung bei 20 °C und 65 % relativer Luftfeuchtigkeit wurde die Klebkraft durch manuelles Abziehen der Etiketten bestimmt. Je nach der dabei aufzuwendenden Kraft wurden die Proben folgendermaßen eingestuft: ++ = Klebkraft hoch, + = Klebkraft mittel. - Klebkraft gering, -- = keine Klebkraft.

d) Zur Bestimmung des Kristallisationsgrades nach der DSC-Methode wird bei einem NCO-Gehalt von 0 % bei ca. 80 bis 100 °C dem Reaktionsprodukt eine Probe von 2 ml entnommen, bei 20 °C abgekühlt und 24 Stunden gelagert. Dann wird wie üblich die Messung durchgeführt: Zunächst wird eine Meßprobe in einem Aluminium-Tiegel verkapselt ($N_2$-Strom durch die Probenkammer). Dann wird der Temperaturbereich von -50 bis 150°C mit einer Heizrate von 10,0 °C pro Minute durchfahren und jede Sekunde eine Messung vorgenommen. Es werden zwei Läufe durchgeführt. Als Vergleich wird PEG 6000 genommen. Der Kristallisationsgrad in % ergibt sich dadurch, daß man die Schmelzenthalpie des PEG 6000, gemessen in mJ/mg, als 100 % setzt und die Schmelzenthalpie des Polyurethans damit vergleicht.

**Patentansprüche**

**1.** Klebstoff auf der Basis eines Polyurethans aus

A) mindestens einem Diisocyanat und

B) mindestens einem niedermolekularen Polyethylenglykol,

**dadurch gekennzeichnet, daß** das Polyethylenglykol ein Molekulargewicht von bis zu 2 000 hat und das Polyurethan

a) einen Kristallisationsgrad von weniger als 20 % nach der DSC-Methode hat, bezogen auf den Kristallisationsgrad von Polyethylenglykol 6 000 als Standard und

b) permanent klebrig ist.

2. Klebstoff nach Anspruch 1, **gekennzeichnet, durch** eine Schmelzviskosität des Polyurethans von mehr als 5 Pas bei 110°C nach Epprecht.

3. Klebstoff nach einem der Ansprüche 1 oder 2, **dadurch gekennzeichnet, daß** das Diisocyanat aromatisch ist und zweckmäßigerweise bis zu 50 Gew.-% durch aliphatische oder cycloaliphatische Diisocyanate ersetzt werden kann.

4. Klebstoff nach mindestens einem der Ansprüche 1 bis 3, **dadurch gekennzeichnet daß** das Polyethylenglykol mit einem Molekulargewicht von bis zu 2 000 teilweise ersetzt werden kann durch mindestens ein Polyol aus der folgenden Gruppe:

a) in einem Ausmaß bis zu 50 % durch ein Block- oder statistisches Copolymeres von Ethylenoxid,

b) in einem Ausmaß von vorzugsweise bis zu 20 % durch ein hydrophobes Diol allein mit einer aliphatischen oder cycloaliphatischen Struktur,

c) durch hydrophobe homopolymere Polyalkylenglykole, wobei die AlkylenGruppe mehr als 2 C-Atome hat, und zwar in einem Ausmaß von bis zu 10 % für $C_3$-Alkylen-Gruppen und von bis zu 20 % für $C_4$-Alkylen-Gruppen,

d) in einem Ausmaß bis zu 40 % durch Polyethylenglykol mit einem Molekulargewicht von mehr als 2 000 bis 40 000,

e) in einem Ausmaß von bis zu 5 % durch höherfunktionelle Alkohole und

f) in einem Ausmaß von bis zu 5 % durch ionenbildende Diole,

wobei der Anteil in % Gew.-% bedeutet, bezogen auf die Diole insgesamt.

5. Klebstoff nach Anspruch 1, **dadurch gekennzeichnet, daß** er in Form einer bis zu 98%igen wäßrigen Lösung oder Dispersion vorliegt.

6. Klebstoff nach mindestens einem der Ansprüche 1 bis 5, **gekennzeichnet durch** Zusätze aus der Gruppe Lösungsvermittler, Antioxidantien und Konservierungsmittel.

7. Herstellung des Klebstoffes nach mindestens einem der Ansprüche 1 bis 6,
**dadurch gekennzeichnet, daß** die Addition des Polyisocyanats an das Polyol in der Schmelze bei 70 bis 200 °C stattfindet.

8. Verwendung des Klebstoffes nach mindestens einem der Ansprüche 1 bis 6 zum Etikettieren.

9. Verwendung nach Anspruch 8 zur Etikettierung von Flaschen aus Polyolefinen mit Papieretiketten, **dadurch gekennzeichnet, daß** man

a) ein 50%iges wäßriges System aus dem Klebstoff nach mindestens einem der Ansprüche 1 bis 6 herstellt,

b) das wäßrige System in einer Menge von 100 g/m$^2$ auf die Papier-Etiketten aufträgt,

c) das angefeuchtete Papier-Etikett im feuchten Zustand (innerhalb von 10 Sek.) bei Temperaturen von 10 bis 40 °C auf die Flasche drückt und

d) das anhaftende Etikett bei Raumtemperatur trocknet.

10. Verwendung des Klebstoffes nach mindestens einem der Ansprüche 1 bis 6 zum Verkleben von Substraten, **dadurch gekennzeichnet, daß** man

a) ein wäßriges System, die organische Lösung oder eine Schmelze aus dem Klebstoff nach mindestens einem der Ansprüche 1 bis 6 auf eines der beiden zu verklebenden Substrate aufträgt,
b) das beschichtete Substrat trocknet oder abkühlt und
c) das getrocknete oder abgekühlte Substrat mit dem zweiten zu verklebenden Substrat zusammendrückt.

**Claims**

1. An adhesive based on a polyurethane of

   A) at least one diisocyanate and
   B) at least one low molecular weight polyethylene glycol, **characterized in that** the polyethylene glycol has a molecular weight of up to 2,000 and the polyurethane

      a) has a degree of crystallization of less than 20%, as measured by the DSC method, based on the degree of crystallization of polyethylene glycol 6000 as standard and
      b) is permanently tacky.

2. An adhesive as claimed in claim 1, **characterized by** an Epprecht melt viscosity of the polyurethane of more than 5 Pas at 110°C.

3. An adhesive as claimed in claim 1 or 2, **characterized in that** the diisocyanate is aromatic and up to 50% by weight can usefully be replaced by aliphatic or cycloaliphatic diisocyanates.

4. An adhesive as claimed in at least one of claims 1 to 3, **characterized in that** the polyethylene glycol with a molecular weight of up to 2,000 can be partly replaced by at least one polyol from the following group:

   a) to a level of up to 50%, by a block or statistical copolymer of ethylene oxide,
   b) to a level of preferably up to 20%, by a hydrophobic diol with aliphatic or cycloaliphatic structure,
   c) by hydrophobic homopolymeric polyalkylene glycols, the alkylene group containing more than 2 carbon atoms; by up to 10% for $C_3$ alkylene groups and by up to 20% for $C_4$ alkylene groups,
   d) to a level of up to 40%, by polyethylene glycol with a molecular weight of more than 2,000 to 40,000,
   e) to a level of up to 5%, by alcohols of relatively high functionality and
   f) to a level of up to 5%, by ion-forming diols,

   the percentages shown representing % by weight, based on the diols as a whole.

5. An adhesive as claimed in claim 1, **characterized in that** it is present in the form of an up to 98% aqueous solution or dispersion.

6. An adhesive as claimed in at least one of claims 1 to 5, **characterized by** additives from the group solubilizers, antioxidants and preservatives.

7. A process for the production of the adhesive claimed in at least one of claims 1 to 6, **characterized in that** the addition of the polyisocyanate onto the polyol is carried out in the melt at 70 to 200°C.

8. The use of the adhesive claimed in at least one of claims 1 to 6 for labeling.

9. The use claimed in claim 8 for applying paper labels to bottles of polyolefins, **characterized in that**

   a) a 50% aqueous system is prepared from the adhesive claimed in at least one of claims 1 to 6,
   b) the aqueous system is applied to the paper labels in a quantity of (100 g/m$^2$),
   c) the moistened paper label is pressed onto the bottle while still moist (within 10 seconds) at temperatures of 10 to 40°C and
   d) the adhering label is dried at room temperature.

10. The use of the adhesive claimed in at least one of claims 1 to 6 for bonding substrates, **characterized in that**

a) an aqueous system, an organic solution or a melt of the adhesive claimed in at least one of claims 1 to 6 is applied to one of the two substrates to be bonded,
b) the coated substrate is dried or cooled and
c) the dried or cooled substrate is pressed together with the second substrate to be bonded.

**Revendications**

1. Adhésif à base d'un polyuréthane constitué

A) d'au moins un diisocyanate et
B) d'au moins un polyéthylèneglycol de bas poids moléculaire,

**caractérisé en ce que** le polyéthylèneglycol possède un poids moléculaire allant jusqu'à 2000 et **en ce que** le polyuréthane

a) possède un degré de cristallisation inférieur à 20 % selon la méthode DSC, par rapport au degré de cristallisation du polyéthylèneglycol 6000 pris comme référence et
b) est adhésif en permanence.

2. Adhésif selon la revendication 1, **caractérisé par** une viscosité à l'état fondu du polyuréthane supérieure à 5 Pa. s à 110 °C selon Epprecht.

3. Adhésif selon une des revendications 1 ou 2, **caractérisé en ce que** le diisocyanate est aromatique et peut être avantageusement remplacé jusqu'à concurrence de 50 % en poids par des diisocyanates aliphatiques ou cycloaliphatiques.

4. Adhésif selon au moins une des revendications 1 à 3,
**caractérisé en ce que** le polyéthylèneglycol possédant un poids moléculaire allant jusqu'à 2000 peut être remplacé partiellement par au moins un polyol du groupe suivant:

a) dans une proportion allant jusqu'à 50 % en poids, par un copolymère à blocs ou un copolymère statistique d'oxyde d'éthylène,
b) dans une proportion allant de préférence jusqu'à 20 % en poids, par un diol hydrophobe seul, possédant une structure aliphatique ou cycloaliphatique,
c) par des polyalkylèneglycols homopolymères hydrophobes, le groupe alkylène possédant plus de 2 atomes de C, et ce, dans une proportion allant jusqu'à 10 % pour les groupes alkylène en $C_3$ et jusqu'à 20 % pour les groupes alkylène en $C_4$,
d) dans une proportion allant jusqu'à 40 % par un polyéthylèneglycol possédant un poids moléculaire compris entre 2 000 et 40 000,
e) dans une proportion allant jusqu'à 5 % par des alcools de fonctionnalité supérieure et
f) dans une proportion allant jusqu'à 5 % en poids par des diols formant des ions,

la proportion en % se rapportant à un pourcentage en poids, par rapport à la totalité des diols.

5. Adhésif selon la revendication 1, **caractérisé en ce qu'**il est présent sous la forme d'une solution ou d'une dispersion aqueuse allant jusqu'à 98 % en poids.

6. Adhésif selon au moins une des revendications 1 à 5, **caractérisé par** des additifs appartenant au groupe des agents de solubilisation, des antioxydants et des conservateurs.

7. Fabrication de l'adhésif selon au moins une des revendications 1 à 6, **caractérisée en ce que** l'addition du polyisocyanate au polyol dans la masse fondue a lieu entre 70 et 200 °C.

8. Utilisation de l'adhésif selon au moins une des revendications 1 à 6 pour l'étiquetage.

9. Utilisation selon la revendication 8 pour l'étiquetage de flacons de polyoléfines avec des étiquettes en papier, **caractérisée en ce que** l'on

a) fabrique un système aqueux à 50 % en poids avec l'adhésif selon au moins une des revendications 1 à 6,

b) applique le système aqueux dans une proportion de 100 g/m$^2$ sur les étiquettes en papier,

c) presse l'étiquette en papier humectée à l'état mouillé (dans les 10 secondes) sur le flacon à des températures comprises entre 10 et 40 °C et

d) sèche l'étiquette adhérente à température ambiante.

**10.** Utilisation de l'adhésif selon au moins une des revendications 1 à 6 pour le collage de substrats, **caractérisée en ce que** l'on

a) applique un système aqueux, la solution organique ou une masse fondue de l'adhésif selon au moins une des revendications 1 à 6 sur l'un des deux substrats à coller,

b) sèche ou refroidit le substrat enduit et

c) presse le substrat séché ou refroidi avec le deuxième substrat à coller.